# EUROPEAN PATENT APPLICATION

(11) **EP 4 342 333 A1**
(43) Date of publication of application: **27.03.2024**
(21) Application number: 23151898.6
(22) Date of filing: 17.01.2023
(51) Int. Cl.: A46B 13/00, A46B 13/02, A46B 9/00, B60S 3/06

(54) **BRUSH FOR DRYING AND/OR WASHING VEHICLES**

(30) Priority: 23.09.2022 IT 202200019557
(71) Applicant: Favagrossa Edoardo S.r.l., 26041 Roncadello di Casalmaggiore (CR) (IT)
(72) Inventor: FAVAGROSSA, Leonardo, 46019 VIADANA (MN) (IT)
(74) Representative: Monelli, Alberto

(57) **Abstract**

Brush for drying and/or washing a vehicle comprising:
- a rotating shaft (2) rotatable around a rotation axis (20) thereof;
- drying/cleaning means (3) for drying/cleaning the vehicle;
- a first rotatable support plate (4) for supporting said drying/cleaning means (3); said first plate (4) being traversed by the shaft (2) and constrained on the shaft (2) in an operating configuration wherein a fictional lying plane (40) of the first plate (4) and the rotation axis (20) form an angle other than 90°; said drying/cleaning means (3) being connected to the first plate (4) by connecting means (5);
- positioning means (6) for positioning the first plate (4) in said operating configuration.

## Description

The present invention relates to a brush for drying and/or washing vehicles. They are typically used in automatic vehicle washing plants.

Solutions of the type described in EP3500130 are known. This solution shows a washing and/or drying brush for washing and/or drying a vehicle. The solution comprises a rotating shaft on which a tubular support made of plastics is keyed. The tubular support comprises slots to which, by closing inserts, flexible strips are constrainable that are intended to come into contact with the vehicle to perform the cleaning. The tubular support is further tilted relative to the rotation axis of the shaft to increase the axial extension of the action of the brush.

Solutions are known comprising a rotatable shaft to which discs are connected that are arranged orthogonally to the rotation axis and which in turn constrain drying strips perimetrically. Between one disc and the other, along the direction of axial extension of the shaft, circular spacers are present that are keyed on the shaft and made of expanded material. These spacers are obtained by die cutting starting from a block of larger dimensions.

The object of the present invention is to provide a brush that is able to optimize the components by realising a solution that is cheaper and has higher performance, permitting at the same time easy maintenance of the cleaning/drying elements.

The stated technical task and specified objects are substantially achieved by a brush comprising the technical features set forth in one or more of the accompanying claims.

Further features and advantages of the present invention will become more apparent from the following indicative, and hence non-limiting, description of a preferred, but not exclusive, embodiment of a brush as illustrated in the appended drawings, in which:
- figure 1 shows a partially exploded perspective view of a brush according to the present invention;
- figure 2 shows a detail of figure 1;
- figure 3 shows a side view of the brush of figure 1;
- figure 4 shows a detail of figure 3;
- figures 5 and 6 show a side view and an exploded view of a further solution of a brush according to the present invention.

In the accompanying figures, reference number 1 denotes a brush for drying/washing a vehicle. The brush 1 comprises a shaft 2 rotatable about a rotation axis 20 thereof.

This shaft 2 can for example be arranged vertically or horizontally or according to another direction. The shaft 2 extends longitudinally along the rotation axis 20. Appropriately, the shaft 2 is rotated around the rotation axis 20 by an electric motor.

The brush 1 comprises drying/cleaning means 3 for drying/cleaning the vehicle. Typically, the means 3 comprises one or more elements intended to come into contact with the vehicle. They thus perform the action of cleaning and drying mechanically by coming into contact with the surface to be cleaned/dried. Appropriately, the drying/cleaning means 3 extends in spoke fashion from the first plate 4.

The brush 1 comprises a first rotatable support plate 4 for supporting said cleaning/drying means 3. The first plate 4 extends substantially parallel to a plane. Appropriately, it is two-dimensional. Appropriately, it extends in thickness between 2 and 30 millimetres. Appropriately, the first plate 4 is a disc. The outer perimeter of the first plate 4 could be circular or polygonal (for example hexagonal, octagonal, etc.).

The first plate 4 is traversed by the shaft 2 and constrained on the shaft 2 in an operating configuration wherein:
- a fictional lying plane 40 of the disc; and
- the rotation axis 20;
form an angle different from 90°. Appropriately, the fictional plane 40 and the axis 20 form an acute angle that is greater than 70° (and being acute it is less than 90°).

The drying/cleaning means 3 comprises positioning means 6 for positioning the first support plate 4 in said operating configuration.

The drying/cleaning means 3 comprises a plurality of flexible vanes 30 arranged along the outer perimeter of the first plate 4 and intended to come into contact with the vehicle. These vanes 30 protrude outside the first plate 4. As already indicated previously, this outer perimeter could be circular or polygonal (for example an octagon). The number of said vanes 30 is advantageously comprised between 4 and 40, preferably between 6 and 18. Appropriately, the vanes 30 are connected removably to the first support plate 4 independently of one another. For example, one can be removed, leaving the others connected.

At least one (preferably each) of said vanes 30 comprises a connecting end 301 connecting to the first support plate 4. The end 301 comprises two flaps 302, 303 constrained on opposite faces of the first plate 4 (i.e. constrained on faces facing in opposite directions). Moving away from said end 301, at least one (preferably each) of said vanes 301 extends in thickness between a first and a second opposite surface 304, 305. The first surface 304 is a drying/washing surface and is intended to come into contact with the vehicle; the first surface 304 can be made of material that is suitable for the action of drying/cleaning, for example felt, expanded material, microfibre etc. The second surface 305 defines a concavity 306. This concavity 306 faces in an opposite direction to the advancement direction of the vane 30. The drying/cleaning means 3 is connected to the first plate 4 by connecting means 5. The drying/cleaning means 5 and the first plate 4 are thus assembled physically. Appropriately, the connecting means 5 is a removable connecting means 5. It thus permits a removable connection of the drying/cleaning means 3 to the first plate 4.

As exemplified in the accompanying figures, the connecting means 5 comprises/is made of Velcro.

For example, Velcro connecting means could each connect the two flaps 302, 303 to the first plate 4, in particular to opposite faces of the first plate 4. In this connection, Velcro elements would be connected to both the two flaps 302, 303 and to the first plate 4.

But other connecting means could be present. For example, mechanical connecting means like: clips, buttons, hooks, etc.

These systems permit a fast and easy maintenance intervention. In particular, they do not require the use of tools. In an alternative solution, the connecting means 5 could also be of irremovable type, for example stitching.

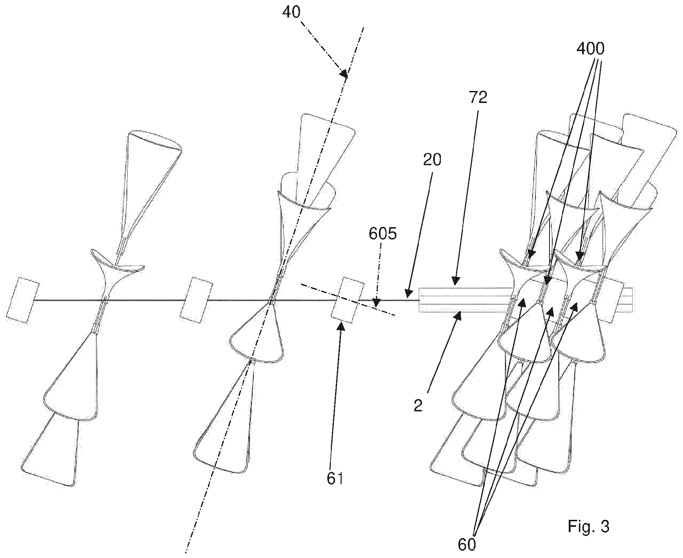

The positioning means 6 comprises a first annular support 61 traversed by the shaft 2. Appropriately, the first annular support 61 is made of stiff material. Appropriately, the first annular support 61 is made of plastic material. Appropriately, the first support 61 is a single monolithic body. In particular, the first support 61 is stiffer than the first disc 4. Appropriately, the first annular support 61 is moulded, i.e. obtained by moulding. Appropriately, the first annular support 61 extends along a longitudinal axis 605 (see for example fig. 3). This longitudinal axis 605, in the operating configuration, extends along a direction that forms an angle other than zero with the rotation axis 20 of the shaft 2. This angle is for example comprised between 5° and 30°, is preferably comprised between 15° and 20°.

The first support 61 extends between a first end nearer first plate 4 and a second end that is further from the first plate 4 relative to the first end.

Appropriately, the first support 61 defines a first face 601 facing the first support plate 4; a direction that is orthogonal to an imaginary plane 600 defined by said first face 601 and a direction parallel to that of the rotation axis 20 forming an angle other than 0. This angle is for example comprised between 10° and 25°.

The first annular support 61 comprises a second face 602 facing in a direction that is opposite the first face 601; the first support 61 comprises:
- an inner surface 603 facing the shaft 2; and
- protruding means 604 that from the inner surface 603 protrudes to the shaft 2. This protruding means 604 in the operating configuration tilts the longitudinal axis 605 of the first support 61 relative to the rotation axis 20 of the shaft 2.

The first annular support 61 comprises one or more wedge-shaped dowels 610 that enable said first support 61 to be so positioned that a direction of the longitudinal axis 605 of the first support 61 and a direction parallel to that of the rotation axis 20 form an angle other than 0. The dowels in the preferred solution are made as a single piece with the first annular support 61, but could possibly be elements assembled on the first annular support 61.

The first support 61 and the first plate 4 are advantageously distinct bodies that are assembled together.

As exemplified in the accompanying figures, the shaft 2 and the first support plate 4 have one, grooves 71 and, the other, corresponding reciprocally associated protrusions 72.

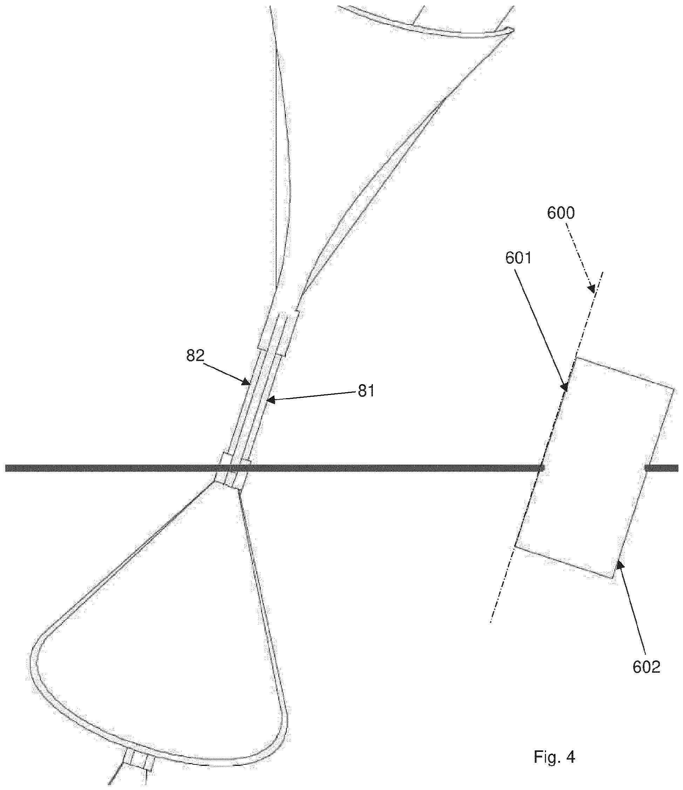

The brush 1 can comprise a first discoidal reinforcement 81 (which in the technical field can also be defined as a "bristle guard"). See, for example, Figure 4.

The discoidal first reinforcement 81 is appropriately coaxial with the shaft 2. The discoidal first reinforcement 81 is appropriately traversed by the shaft 2.

The discoidal first support 81 is interposed between the first annular support 61 and the first plate 4.

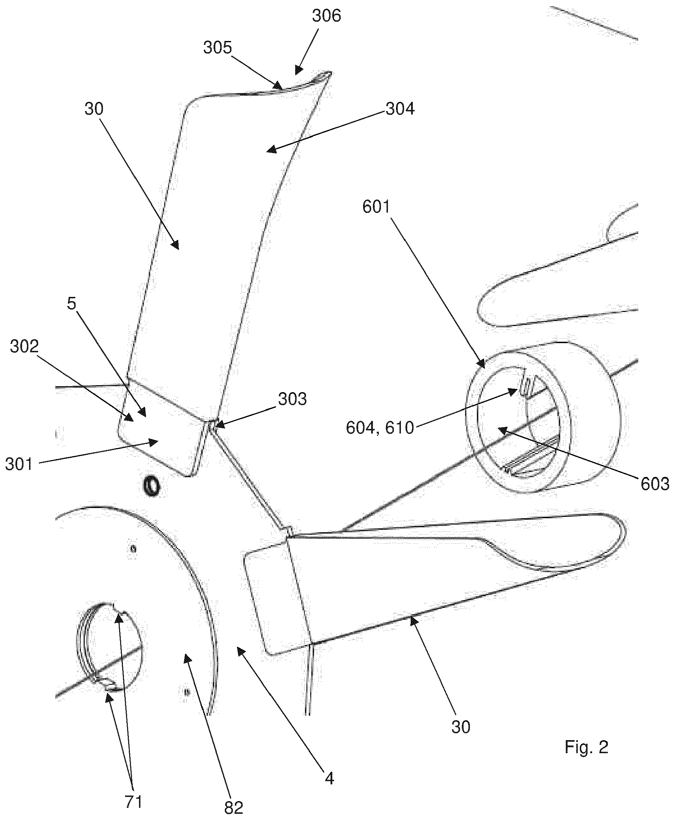

Advantageously, the brush 1 also comprises a second discoidal reinforcement 82 (see for example figures 2 and 4). The support disc 4 is appropriately interposed between the first and the second discoidal reinforcement 81, 82. Appropriately, the first plate 4 is packed between the first and the second reinforcement 81, 82. Appropriately, the first and the second reinforcement 81, 82 are reciprocally connected mechanically; for example, a connecting element could be present (for example a grub screw or threaded connecting means) that connects the first and the second reinforcement 81, 82; for example, the latter ensures that the connecting element traverses the first plate 4.

In a particular solution, the first and/or the second reinforcement 81, 82 could be coupled (assembled/solidly constrained) with the first plate 4. Appropriately, the first and the second reinforcement 81, 82 are made of at least partially deformable material. For example, they could be made of expanded material

Possibly, in one particular solution the first and the second reinforcement 81, 82 could be unconstrained and independent of one another.

Possibly, (solution not illustrated) a first intermediate disc could also be present that is placed between the first reinforcement 81 and the first plate 4. Appropriately, there could also be a second intermediate disc interposed between the first plate 4 and the second reinforcement 82 (solution not illustrated).

The positioning means 6 comprises a plurality of annular supports.

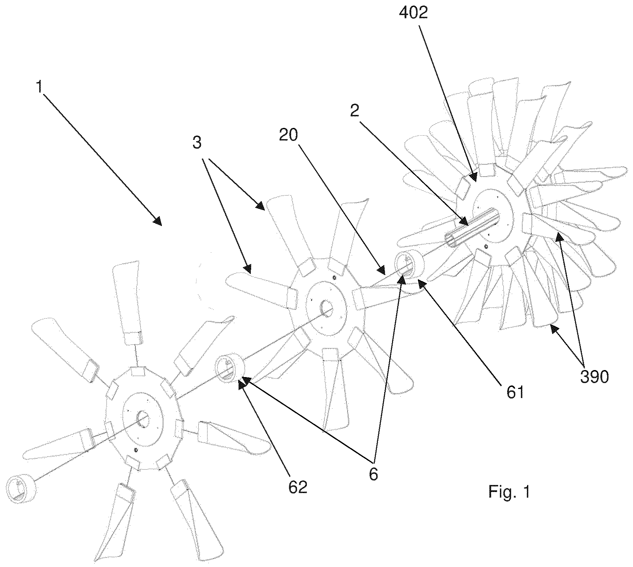

Appropriately, the positioning means 6 comprises a second support 62 (see for example figure 1). One or more of the features previously described for the first support 61 can be repeated for the second support 62. In particular, the first and the second support 61, 62 are identical to one another. Appropriately, the first plate 4 is interposed between the first and the second support 61, 62. Appropriately, the first and the second support 61, 62 clamp between them the first plate 4. In particular, they maintain the lying plane 40 of the first plate tilted relative to the rotation axis 20.

Appropriately, the brush 1 comprises a second rotatable support plate 402 for supporting additional cleaning/drying means 390. The additional cleaning/drying means 390 is constrained on the edge of the second plate 402. One or more of the features described with reference to the first plate 4 can also be repeated for the second plate 402. Similarly, what was described relative to the cleaning/drying means 3 can be repeated for the additional cleaning/drying means 390.

Appropriately, the first support 61 is interposed between the first and the second plate 4, 402. The first support 61 thus acts as a spacer between the first and the second plate 4, 402.

The first support 61 is made by moulding and thus enables material waste to be minimised relative to solutions in which it is made by die cutting from a workpiece of larger dimensions. Further, it is impermeable and permits an easy passage of air, enabling the brush 1 to be dried faster.

As exemplified in the accompanying figures, the brush 1 comprises:
- a plurality of annular supports 60 comprising said first support 61 and/or said second support 62; appropriately, for each of said supports 60 what has been described for the first support 61 can be repeated;
- a plurality of rotatable support plates 400 each supporting corresponding drying/cleaning means 3 of the vehicle; for the sake of clarity, it is pointed out that this plurality of support plates 400 comprises the first plate 4 and/or the second plate 402 and alternates along the shaft 2 with corresponding annular supports 60. Appropriately, what is indicated for the first plate 4 can be repeated for each of said support plates 400.

The first plate 4 and the first support 61 set can thus be repeated in a modular manner along the rotation axis 20.

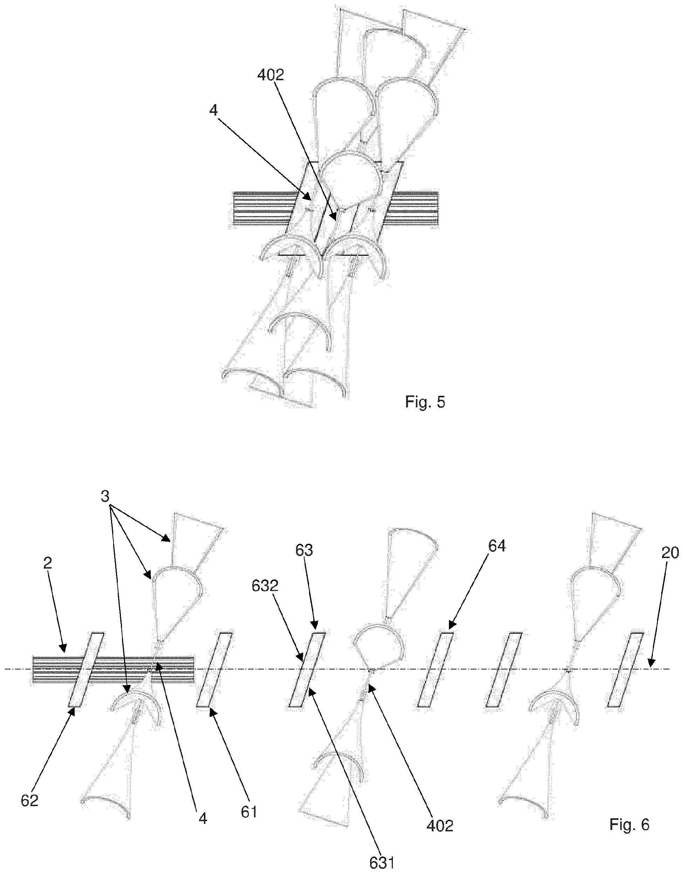

Let reference now be made to the solution illustrated in figures 5 and 6.

Appropriately, the first support 61 is directly coupled with the first plate 4. Appropriately, in this case the first support 61 and the first plate 4 are glued reciprocally. Appropriately, a surface of the first support 61 facing the first plate 4 is glued to the first plate 4. Interposed elements are not present between the first support 61 and the first plate 4 (except for the layer of adhesive that allows gluing).

Similarly, the second support 62 is directly coupled with the first plate 4. In this case, the first plate 4 and the second support 62 are glued together. Appropriately, a surface of the second support 62 facing the first support 61 is glued to the first plate 4. Interposed elements are not present between the second support 62 and the first plate 4 (except for the layer of adhesive that allows gluing).

The first and/or the second support 61, 62 are made of die-cut or moulded material.

In this solution, the first and the second reinforcement 81, 82 are absent. Appropriately, the first and the second intermediate disc are absent.

Appropriately, the second plate 402 is interposed between a third and a fourth positioning support 63, 64 of the second plate 402. The third and the fourth support 63, 64 enable the second plate 402 to be positioned non-orthogonally to the axis 20 of the shaft 2. In particular, the second plate 402 is glued to the third and to the fourth support 63, 64. Appropriately, the third support 63 is adjacent to the first support 61. Appropriately, the first and the third support 61, 63 have the same tilt and the same orientation relative to a plane that is orthogonal to the axis 20 of the shaft 2.

Appropriately, one or more of the features previously indicated for the first support 61 can be repeated for the third support 63 and/or for the fourth support 64. Advantageously the first and the third support 61, 63 could also have the same shape and dimensions. Also the third and the fourth support 63, 64 have appropriately the same shape and dimensions.

In particular, the third support 63 is annular and traversed by the shaft 2.

Appropriately, the third support 63 defines a third face 631 facing the second support plate 402; a direction that is orthogonal to an imaginary plane defined by said third face 631 (on which it lies) and a direction parallel to that of the rotation axis 20 forms an angle other than 0. This angle is for example comprised between 10° and 25°.

The third annular support 63 comprises a fourth face 632 facing in a direction that is opposite the third face 631. The third and the fourth face 631, 632 are advantageously parallel. The fourth face 632 is intended to come into contact with the first support 61.

The present invention achieves important advantages.

First of all, it enables the components to be optimised. Using a disc facilitates supporting the cleaning/drying means and enables the production of material to be optimized. It further enables connecting systems to be used for connecting to the cleaning/drying means that are faster and more rapid, facilitating maintenance. For example, a Velcro system permits very rapid replacement. Further, using a tilted disc is important because it enables the rotation of the shaft to "simulate" alternate cleaning/drying backwards and forwards along the axis. In particular, it enables an oscillating movement to be simulated that optimises washing/drying. The tilted positioning of the disc is assigned to a support that is distinct from the support plate. This facilitates the creation and optimization of the components. Further, a single component enables the support plates of the cleaning/drying means to be both spaced apart and positioned tilted.

The invention as it is conceived is susceptible to numerous modifications and variants, all falling within the scope of the inventive concept characterised thereby. Further, all the details can be replaced with other technically equivalent elements. In practice, all the materials used, as well as the dimensions, can be any whatsoever, according to need.

## Claims

1. A brush for drying and/or washing a vehicle comprising:
- a rotating shaft (2) rotatable around a rotation axis (20) thereof;
- drying/cleaning means (3) for drying/cleaning the vehicle;
**characterised in that** it comprises:
- a first rotatable support plate (4) for supporting said drying/cleaning means (3); said first plate (4) being traversed by the shaft (2) and constrained on the shaft (2) in an operating configuration wherein a fictional lying plane (40) of the first plate (4) and the rotation axis (20) form an angle other than 90°; said drying/cleaning means (3) being connected to the first plate (4) by connecting means (5);
- positioning means (6) for positioning the first plate (4) in said operating configuration.

2. The brush according to claim 1, **characterised in that** the connecting means (5) is a removable connecting means.

3. The brush according to claim 1 or 2, **characterised in that** the drying/cleaning means (3) comprises a plurality of flexible vanes (30) arranged along the perimeter of the first plate (4) and intended to come into contact with the vehicle.

4. The brush according to any one of the preceding claims, **characterised in that** the connecting means (5) for connecting the drying/cleaning means (3) to the first plate (4) comprises/is made of Velcro.

5. The brush according to any one of the preceding claims, **characterised in that** the positioning means (6) comprises a first annular support (61) traversed by the shaft (2);
the first annular support (61) extending along a longitudinal axis (605); which in the operating configuration extends along a direction that forms an angle other than 0 with the rotation axis (20) of the shaft (2).

6. The brush according to claim 5, **characterised in that** along said longitudinal axis (605) the first support (61) extends between a first end (601) being closer to the first plate (4) and a second end (602) being further distanced from the first plate (4) relative to the first end (601); the first support (61) comprising:
- an inner surface (603) facing the shaft (2); and
- protruding means (604) that from the inner surface (603) project towards the shaft (2); said protruding means (604) protruding in the operating configuration tilting the longitudinal axis (605) of the first support (61) relative to the rotation axis (20) of the shaft (2).

7. The brush according to claim 5 or 6, **characterised in that** said first support (61) is made of stiff plastic material.

8. The brush according to any one of claims 5 to 7, **characterised in that** the first support (61) defines a first face (601) facing the first support plate (4); said first annular support (61) comprising one or more wedge-shaped dowels (610) that enable said first support (61) to be so positioned that a direction orthogonal to said first face (601) and a direction parallel to that of the rotation axis (20) form an angle other than 0.

9. The brush according to any one of claims 5 to 8, **characterised in that** it comprises a second rotatable support plate (402) for supporting additional cleaning/drying means; the first support (61) being interposed between the first and the second plate (4, 402) and acting as a spacer between the first and the second plate (4, 402).

10. The brush according to any one of claims 5 to 9, **characterised in that**:
- the positioning means (6) comprises a plurality of annular supports (60) comprising said first support (61);
- a plurality of rotatable support plates (400) each associated with the shaft (2) and supporting corresponding drying/cleaning means for drying/cleaning the vehicle; said plurality of plates (400) comprising said first plate (4) and alternating with corresponding supports (60).
